Europäisches Patentamt

(19) European Patent Office

Office européen des brevets

(11) Publication number : **0 462 799 A2**

# (12) EUROPEAN PATENT APPLICATION

(21) Application number : 91305501.8

(22) Date of filing : 18.06.91

(51) Int. Cl.⁵ : **H04N 5/262, H04H 7/00**

(30) Priority : 21.06.90 JP 163322/90

(43) Date of publication of application :
**27.12.91 Bulletin 91/52**

(84) Designated Contracting States :
**DE FR GB IT**

(71) Applicant : **MATSUSHITA ELECTRIC
INDUSTRIAL CO., LTD.
1006, Oaza Kadoma
Kadoma-shi, Osaka-fu, 571 (JP)**

(72) Inventor : **Kawamoto, Shigeharu
852-4-203, Tokaichibacho
Midori-ku, Yokohama-shi (JP)**

(74) Representative : **Smith, Norman Ian et al
F.J. CLEVELAND & COMPANY 40-43 Chancery
Lane
London WC2A 1JQ (GB)**

(54) **Digital mixer circuit.**

(57)    A digital mixer circuit is disclosed in which a plurality of digital signals are shifted in bit and applied to a plurality of selectors (11-18), which are operated in accordance with a predetermined weighting coefficient, thereby producing a plurality of selected data trains shorter in bit length than the input signals. The plurality of selected data trains are added to each other to calculate the sum. Since the input signals are added with the bit length thereof shortened, the rate of increase in the number of adder gates is smaller with the increase in the number of steps in which the mixing ratio is changeable, thereby facilitating the circuit integration.

EP 0 462 799 A2

# F I G. 2

## BACKGROUND OF THE INVENTION

The present invention relates to a digital mixer circuit used for mixing or the like processing of a video signal or an audio signal at the time of special-effect operation of an image.

A mixer circuit for regulating the mixing ratio of a plurality of signals is indispensable for the special-effect operation by a video signal for television or the like. Such a mixer circuit may be either an analog or a digital one, the latter being used with an apparatus for processing a digital signal such as a digital television set.

A conventional digital mixer circuit of this type is disclosed in JP-A-63-54071. This digital mixer circuit will be briefly described below with reference to Fig. 1.

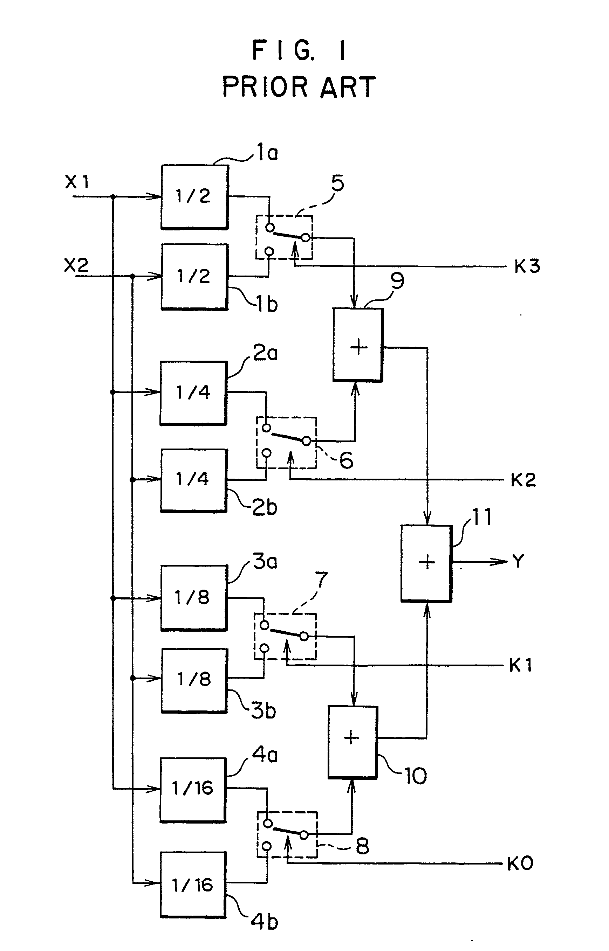

In Fig. 1, reference numerals 1a, 1b designate a weighting circuit for multiplying a two-channel input signal by a fixed multiplier of 1/2, numerals 2a, 2b a weighting circuit for multiplying a two-channel input signal by a fixed multiplier of 1/4, numerals 3a, 3b a weighting circuit for multiplying a two-channel input signal by a fixed multiplier of 1/8, and numerals 4a, 4b a weighting circuit for multiplying a two-channel input signal by a fixed multiplier of 1/16.

Numeral 5 designates a switch for selectively switching the two-channel input signals from the weighting circuits 1a, 1b, and numerals 6, 7, 8 switches similar to the switch 5 for selectively switching the two-channel input signals from the weighting circuits 2a, 2b, the two-channel input signals from the weighting circuits 3a, 3b, and the two-channel input signals from the weighting circuits 4a, 4b respectively.

Further, numerals 9, 10, 11 designate adders. The weighting circuits 1a, 1b, 2a, ..., 4b, the switches 5 to 8, and the adders 9 to 11 make up a digital mixer circuit capable of changing the mixing ratio of the two-channel input signals in 16 steps.

In the conventional digital mixer circuit having the configuration described above, two-channel input signals are subjected to the weighting of 1/2, 1/4, 1/8 and 1/16 in similar fashion respectively, and the two-channel input signals subjected to the same weighting process are selectively switched by the switches 5, 6, 7 and 8 respectively, so that one of the two input signals is applied to the adder 9, 10 and 11 respectively.

The digital mixing circuit described above concerns a case in which the mixing ratio of two-channel input signals is capable of being changed in 16 steps, i.e., $2^4$ steps, and the number $2^n$ of steps may be secured by increasing the number of weighting circuits, switches and adders correspondingly.

Take the adders, for example. Assuming that the two-channel input signals are 8-bit signals which are to be mixed at the mixing ratio of $2^8$, the circuit is configured of four adders holding the relation that an 8-bit length plus an 8-bit length equals a 9-bit length, two adders holding the relation that a 9-bit length equals a 12-bit length, and one adder holding the relation that a 12-bit length plus a 12-bit length equals a 16-bit length.

The conventional digital mixer circuit requires as many adder gates as the bit length of input signals, thereby leading to the problem that circuit integration becomes more difficult according to the number of adders increases with the increase in the number of steps in which the mixing ration is changed.

## SUMMARY OF THE INVENTION

The present invention is intended to obviate the above-mentioned problem, and the object thereof is to provide a digital mixer circuit in which the rate of increase in the number of adder gates with the increase in the number of steps of change in the mixing ratio is reduced to facilitate the circuit integration.

In order to achieve the above-mentioned object, there is provided according to the present invention a digital mixer circuit comprising a number n of selectors for selecting input signals for each predetermined bit length in accordance with a predetermined weighting coefficient and producing a number n of selected data trains shorter in bit length than the input signals, and an adder for adding a number n of selected data trains for each bit length selected by the number n of selectors and calculating the sum of the number n of selected data trains.

## BRIEF DESCRIPTION OF THE DRAWINGS

Fig. 1 is a circuit diagram showing a general configuration of a conventional digital mixer circuit.
Fig. 2 is a circuit diagram showing a general configuration of a digital mixer circuit according to an embodiment of the present invention.

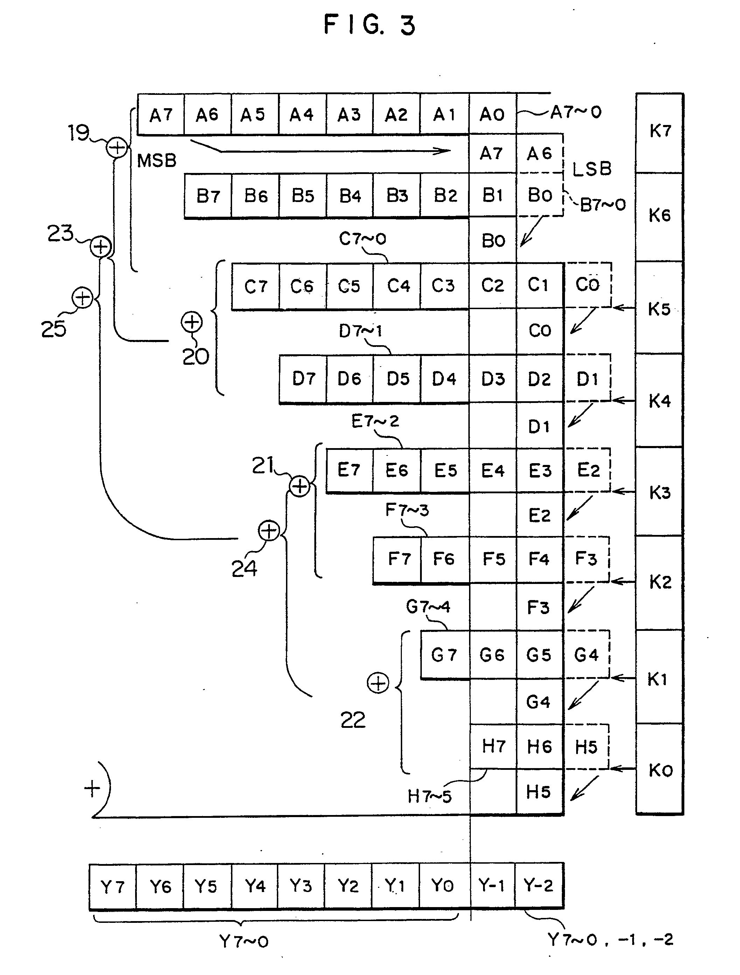

Fig. 3 is a diagram for explaining the process of adding operation by the adders in Fig. 2.

## DESCRIPTION OF THE PREFERRED EMBODIMENT

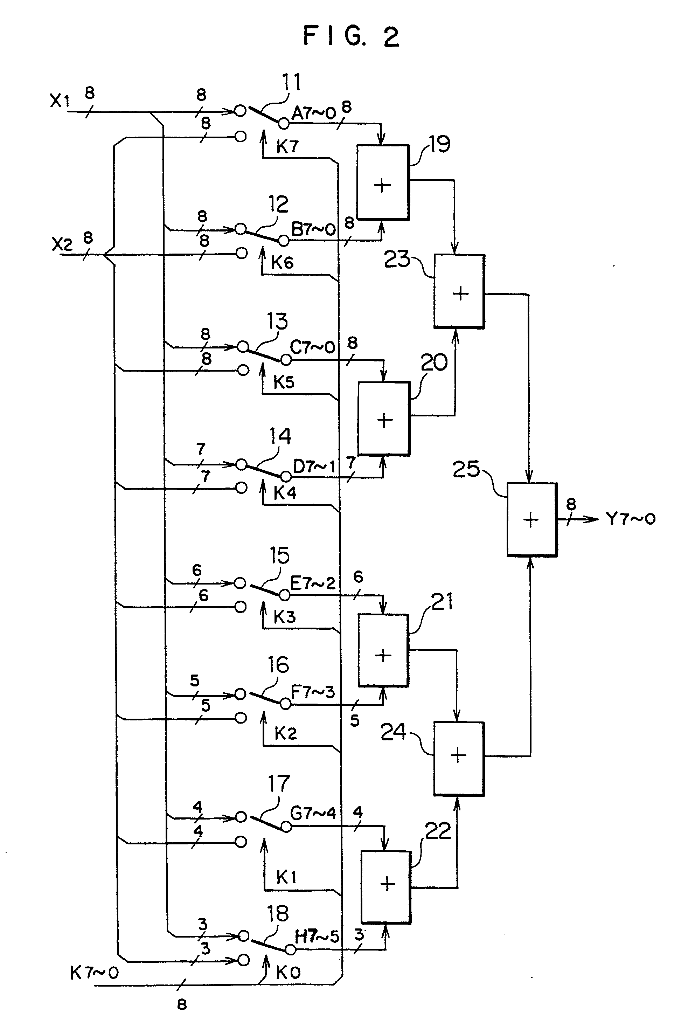

An embodiment of the present invention will be described below with reference to the accompanying drawings. Fig. 2 is a circuit diagram showing a general configuration of a digital mixer circuit according to an embodiment of the present invention.

In Fig. 2, reference characters $X_1$, $X_2$ designate eight-bit binary input signals mixed by the present circuit, and reference numerals 11, 12, ..., 18 selectors for selecting desired input signals from the two-channel input signals $X_1$, $X_2$. The selectors are supplied with the input signals $X_1$, $X_2$ multiplied by predetermined fixed multipliers "1", "1/2", "1/4", "1/8", "1/16", "1/32" and "1/64" respectively. These bits may be shifted in software fashion instead of through a bit shifter.

Specifically, the selector 11 is supplied with input signals $X_1$, $X_2$ multiplied by the fixed multiplier "1", with the result that a selected data train $A_{7-0}$ having an eight-bit length as shown is produced as shown in Fig. 2.

The selectors 12, 13 are supplied with input signals $X_1$, $X_2$ multiplied by the fixed multiplier "1/2", and as a result of selection thereby, selected data trains $B_{7-0}$, $C_{7-0}$ of eight-bit length are produced.

The selector 14, on the other hand, is supplied with the input signals $X_1$, $X_2$ multiplied by the fixed multiplier "1/4", and as a result of selection thereby, selected data trains $D_{7-1}$ of 7-bit length are produced. The selector 15, which is supplied with the input signals $X_1$, $X_2$ multiplied by the fixed multiplier "1/8", produces a selected data train $E_{7-2}$ of 6-bit length as a result of selection thereby, and the selector 16 supplied with the input signals $X_1$, $X_2$ multiplied by the fixed multiplier "1/16" produces a selected data train $F_{7-3}$ of 5-bit length as a result of selection thereby.

Further, the selector 17, which is supplied with the input signals $X_1$, $X_2$ multiplied by the fixed multiplier "1/32", produces a selected data train $G_{7-4}$ of 4-bit length as a result of selection thereby, and the selector 18, supplied with the input signals $X_1$, $X_2$ multiplied by the fixed multiplier "1/64", produces a selected data train $H_{7-5}$ as a result of selection thereby.

The character $K_{7-0}$ designates a weighting coefficient ($0 \leq K_{7-0} \leq 255$ according to the present invention). Actually, this weighting coefficient $K_{7-0}$ is binarized and expressed by 8 bits, so that each bit is indicated by $K_7$, $K_6$, ..., $K_0$ representing "1" or "0" ($K_7$ being assumed to be MSB, and $K_0$ LSB), and the bits $K_7$, $K_6$, ..., $K_0$ of these weighting coefficients are applied sequentially to the selectors 11, 12, ..., 18.

Numerals 19, 20, ..., 25 designate adders having the function of "rounding" to the nearest whole number. The adders 19, 20, 21, 22 are supplied with selected data trains $A_{7-0}$, $B_{7-0}$, ..., $H_{7-5}$ from the selectors 11, 12, selectors 13, 14, selectors 15, 16 and selectors 17, 18 respectively; and the adders 23, 24 with the result of addition between the adders 19 and 20 and the adders 21 and 22 respectively.

Also, the adder 25 is supplied with the result of addition between the adders 23 and 24, whereby an output signal $Y_{7-0}$ is produced as a result of mixing the input signals $X_1$ and $X_2$ at the desired mixing ratio.

According to the present embodiment, the aforementioned elements make up a digital mixer circuit for mixing the input signals $X_1$ and $X_2$ at the desired mixing ratio among all the $2^8$ or 256 steps in accordance with the selection of the weighting coefficient $K_{0-7}$.

Now, the operation of a digital mixer circuit according to the present embodiment having the above-mentioned configuration will be explained.

First, with the input signals $X_1$, $X_2$ as a basis, the selector 11 is supplied with 8-bit input signals $X_1$, $X_2$ multiplied by the fixed multiplier "1", the selectors 12, 13 with 8-bit input signals $X_1$, $X_2$ multiplied by the fixed multiplier "1/2", and the selector 14 with 7-bit input signals $X_1$, $X_2$ multiplied by the fixed multiplier "1/4".

Also, the selector 15 is supplied with 6-bit input signals $X_1$, $X_2$ multiplied by the fixed multiplier "1/8", the selector 16 with 5-bit input signals $X_1$, $X_2$ multiplied by the fixed multiplier "1/16", the selector 17 with 4-bit input signals multiplied by the fixed multiplier "1/32", and the selector 18 with 3-bit input signals $X_1$, $X_2$ multiplied by the fixed multiplier "1/64".

The selector 11 is supplied with a weighting coefficient $K_7$, the selector 12 with a weighting coefficient $K_6$, the selector 13 with a weighting coefficient $K_5$, the selector 14 with a weighting coefficient $K_4$, the selector 15 with a coefficient $K_3$, the selector 16 with a weighting coefficient $K_2$, the selector 17 with a weighting coefficient $K_1$, and the selector 18 with a weighting coefficient $K_0$.

The selectors 11, 12, ..., 18 are adapted to select 2-channel input signals $X_1$, $X_2$ multiplied by a predetermined fixed multiplier on the basis of the weighting coefficients $K_7$, $K_6$, ..., $K_0$ applied thereto respectively, and the adders 19, 20, 21, 22 add selected data trains $A_{7-0}$, $B_{7-0}$, ..., $H_{7-5}$ which are the result of selection by the selectors 11, 12, ..., 18 respectively.

Now, the adding operation of the adders 19, 20, 21 and 22 will be described with reference to Fig. 2.

The selected data trains $A_{7-0}$, $B_{7-0}$, ..., $H_{7-5}$ with largest and smallest subscripts produced from the selectors 11, 12, ..., 18 are designated as MSB and LSB respectively.

4

At the time of addition by the adder 19, the selected data $A_{7-0}$ and $B_{7-0}$ are shited by one bit toward MSB to double, and the integers are rendered 7 digits from $A_7$ making up MSB for $A_{7-0}$ and 6 digits from $B_7$ making up MSB for $B_{7-0}$.

At the time of addition by the adders 20, 21, 22, the selected data $C_{7-0}$, ..., $H_{7-5}$ have the integers thereof handled as a value of 5, ..., 1, 0 digit from the MSB side respectively.

Before addition, in order to subject the selected data $A_{7-0}$ to the "rounding" operation for correction by rounding to the nearest whole number, $A_7$ and $A_6$, not only as a value of the seventh and sixth orders above decimal point, are added as a value of the first and second orders below decimal point respectively, while the selected $B_{7-0}$ has $B_0$ rounded to the nearest whole number surrounded by dashed line in Fig. 2 as a value of the second order below decimal point.

Further, as to the remaining selected data $C_{7-0}$, $D_{7-1}$, ..., $H_{7-5}$, the adders 19, 20, ..., 25 according to the present embodiment perform the "rounding" function assuming the effectiveness down to the second place below decimal point, thus rounding the $C_0$, $D_1$, $E_2$, $F_3$, $G_4$, $H_5$ at the third Place below decimal point surrounded by dashed line to the second place.

Then, as described above, the adders 19, 20, 21, 22 operate to add the values surrounded by solid line in Fig. 2 of the selected data trains $A_{7-0}$, $B_{7-0}$, ..., $H_{7-0}$ produced from the selectors 11, 12, selectors 13, 14, selectors 15, 16 and selectors 17, 18. The adders 23 and 24 are then operated to add the results of addition by the adders 19, 20 and the adders 21, 22 to each other, further followed by the adder 25 adding the results of addition of the adders 23 and 24.

In this way, all the data trains of $A_{7-0}$, $B_{7-0}$, ..., $H_{7-5}$ are added to produce a 10-bit output data $Y_{7-0,-1,-2}$. Finally, in order to produce the integral portion $Y_{7-0}$ of this output data $Y_{7-0,-1,-2}$ as an 8-bit mixing output, the output data $Y_{7-0,-1,-2}$ is shifted two bits toward LSB, and $Y_{-1}$ and $Y_{-2}$ making up the data below decimal point of the output data $Y_{7-0,-1,-2}$ are discarded. As a result, an 8-bit mixing output $Y_{7-0}$ including $Y_7$ to $Y_2$ as a 6-bit integral portion and $Y_1$ and $Y_0$ as a two-bit decimal portion is produced from the output of the adder 25.

These series of adding operations may be expressed by an equation shown below.

$$
\begin{aligned}
Y_{7-0,-1,-2} = & \left[ \left[ \left\{ X_1 \times 2 + \left( \frac{X_1}{64} \right) INT \right\} \times (1-K_7) + \left\{ X_2 \times 2 + \left( \frac{X_2}{64} \right) INT \right\} \times K_7 \right. \right. \\
& + \left( \frac{X_1}{2} + F_1 \times \phi \right) \times 2 \times (1-K_6) + \left( \frac{X_2}{2} F_1 \times \phi \right) \times 2 \times K_6 \\
& + \left( \frac{X_1}{2} + F_1 \times \phi \right) \times (1-K_5) + \left( \frac{X_2}{2} F_1 \times \phi \right) \times K_5 \\
& + \left( \frac{X_1}{4} + F_1 \times \phi \right) \times (1-K_4) + \left( \frac{X_2}{4} F_1 \times \phi \right) \times K_4 \\
& + \left( \frac{X_1}{8} + F_1 \times \phi \right) \times (1-K_3) + \left( \frac{X_2}{8} F_1 \times \phi \right) \times K_3 \\
& + \left( \frac{X_1}{16} + F_1 \times \phi \right) \times (1-K_2) + \left( \frac{X_2}{16} F_1 \times \phi \right) \times K_2 \\
& + \left( \frac{X_1}{32} + F_1 \times \phi \right) \times (1-K_1) + \left( \frac{X_2}{32} F_1 \times \phi \right) \times K_1 \\
& \left. \left. + \left( \frac{X_1}{64} + F_1 \times \phi \right) \times (1-K_0) + \left( \frac{X_2}{64} F_1 \times \phi \right) \times K_0 \right] / 4 \right] INT
\end{aligned}
$$

where $Y_{7-0,-1,-2}$ is an added value, and INT means that the figures below the decimal point are discarded, and $F_1 x \phi$ that the figures below decimal point are rounded to the nearest whole number. The added value is divided by four to shift two bits toward LSB.

In this way, the adding operation according to the aforementioned equation by the adders 19, 20, ..., 25 permits the adder 25 to produce an 8-bit mixing output signal as an integral portion $Y_{7-0}$ of the added value $Y_{7-0,-1,-2}$ applied thereto.

As obvious from the above-described embodiment, the data applied to the selectors 14, 15, 16, 17, 18 are shorter in bit length than eight bits of the input data $X_1$, $X_2$, thereby making it possible to reduce the number of gates of the adders 20, 21, 22, 24, 25 to which the outputs of the selectors 14, 15, 16, 17, 18 are applied.

If the weighting coefficient $K_{7-0}$ in the embodiment is set to 255 (FF in sexadecimal number), bits $K_7$, $K_6$, ..., $K_0$ are all "1", so that either input signal $X_1$ or $X_2$ is produced directly as a mixing output signal $Y_{7-0}$.

Also, the input signals $X_1$, $X_2$ according to the present embodiment may be in three or more instead of two channels.

As explained above, according to the digital mixer circuit of the present embodiment, the bit length of the data handled by the selectors 11, 12, ..., 18 and the adders 19, 20, ..., 25 is reduced, and therefore integration of the circuit is facilitated.

It will thus be understood from the foregoing description that a digital mixer circuit according to the present invention comprises a number n of selectors for selecting each of a plurality of input signals for each predetermined bit length on the basis of a predetermined weighting coefficient and producing a number n of selected data trains shorter in bit length than the input signals, and a plurality of adders for adding the number n of selected data trains for each bit length selected by the number n of selectors thereby to calculate the sum of the number n of selected data trains, wherein the rate of increase in the number of adder gates with the increase in the number of steps in which the mixing ratio is changeable thereby to facilitate the circuit integration.

## Claims

1. A digital mixer circuit comprising a number n of selectors (11-18) for selecting an input signal for each predetermined bit length among a plurality of input signals on the basis of a predetermined weighting coefficient and producing a number n of selected data trains shorter in bit length than the input signals, and a plurality of adders (19-25) for adding a number n of selected data trains for each bit length selected by the number n of selectors and calculating the sum of the number n of selected data trains.

2. A digital mixer circuit according to Claim 1, wherein the weighting coefficient includes a number n of binary digits and each of the number n of selectors is selected in accordance with the contents of each of the n bits.

3. A digital mixer circuit according to Claim 1, wherein the bit length of the input signals applied to at least one selector is reduced.

4. A digital mixer circuit comprising a first digital input signal expressed in n bits, a second digital input signal expressed in n bits, means for supplying the first input signal to each of the first input terminals of the number n of selectors, means for supplying the second input signal to each of the second input terminals of the number n of selectors, means for selecting one of the first and second input terminals of the number n of selectors on the basis of a weighting coefficient, and means for adding the outputs of the number n of selectors.

5. A digital mixer circuit according to Claim 4, wherein the weighting coefficient is a binary number of n bits and each bit is applied to each of the number n of selectors as a corresponding control signal.

6. A digital mixer circuit according to Claim 4, wherein the number of bits of the input signal is reduced to n or less when the first digital input signal is applied to the selectors.

7. A digital mixer circuit comprising a plurality of selectors (11-18) for selecting first and second input signals expressed in n bits and a plurality of adders (19-25) for adding the outputs of the selectors to each other, wherein the number of bits of the input signal applied to at least one of the selectors is n-1 or less.

# F I G. I
# PRIOR ART

# F I G. 2

# FIG. 3